# DEMANDE DE BREVET EUROPEEN

(11) **EP 3 786 783 A1**
(43) Date de publication de la demande: **03.03.2021**
(21) Numéro de dépôt: 20192279.6
(22) Date de dépôt: 21.08.2020
(51) Int. Cl.: G06F 8/20, G06F 9/50, G06Q 10/06

(54) **SYSTEME D'AIDE A LA CONCEPTION D'APPLICATION D'INTELLIGENCE ARTIFICIELLE, EXECUTABLE SUR DES PLATES-FORMES INFORMATIQUES DISTRIBUEES**

(30) Priorité: 30.08.2019 EP 19194722; 19.12.2019 FR 1915004
(71) Demandeur: Bull SAS, 78340 Les Clayes-sous-Bois (FR)
(72) Inventeur: EXERTIER, François, 38140 Saint-Martin-D'Uri (FR); GAVILLON, Mathis, 38420 LE VERSOUD (FR)
(74) Mandataire: Debay, Damien

(57) **Abrégé**

La présente invention concerne une fonction de moteur d'apprentissage et son utilisation dans un système utilisant une suite d 'outils d'aide à la conception d'application d'Intelligence Artificielle, (SOACAIA) modulaires et clairement structurés, exécutables sur des plates-formes informatiques distribuées ou non pour parcourir, développer, rendre disponible et gérer des applications d'IA, ce jeu d'outils implémentant quatre fonctions :
Une fonction Studio ;
Une fonction Forge ;
Une fonction Orchestrateur ;
Une fonction de moteur d'apprentissage machine rapide FMLE (FastML Engine).

## Description

### DOMAINE TECHNIQUE ET OBJET DE L'INVENTION

La présente invention se rapporte au domaine des applications d'intelligence artificielle (IA) sur des plates-formes informatiques.

### ETAT DE LA TECHNIQUE

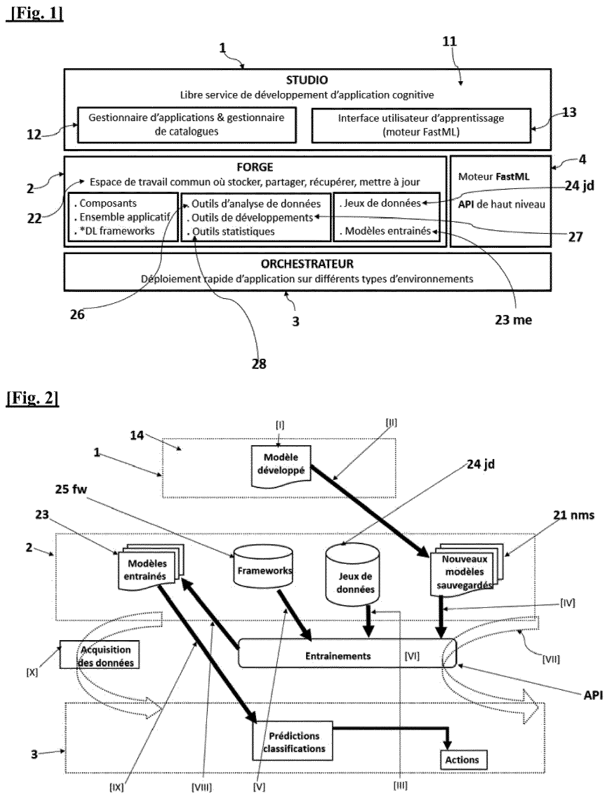

Selon l'état de l'art, le concepteur ou l'utilisateur lors de la phase de déploiement d'une application d'intelligence artificielle réalisent les tâches ([Fig. 1]) de développement, de mise au point, et de déploiement de modèles.

La réalisation de ces tâches présente des inconvénients notamment car elle ne permet pas aux utilisateurs de se focaliser sur leur activité principale. Grâce à un logiciel de type orchestrateur permettant d'automatiser le déroulement d'un certain nombre de processus, la qualité du travail desdits concepteurs/utilisateurs peut être améliorée. Les demandes de brevets FR1663536 et FR1763239 traitent de manière spécifique l'utilisation de l'orchestration pour l'affectation de ressources et proposent des algorithmes afin de déterminer automatiquement sur quelle infrastructure déployer des applications.

L'invention vise ici à pallier au moins l'un de ces inconvénients en proposant aux utilisateurs (le Data Scientist par exemple) une combinaison inédite de modules donnant un dispositif qui automatise une partie du processus traditionnel de développement de modèles machine learning (ML) ainsi que son procédé d'utilisation.

### PRESENTATION GENERALE DE L'INVENTION

La présente invention a donc pour objet de pallier au moins l'un des inconvénients de l'art antérieur en proposant un dispositif et un procédé qui simplifient la création et l'utilisation d'applications d'intelligence artificielle.

Pour parvenir à ce résultat, la présente invention concerne un système utilisant une Suite d'Outils d'Aide à la Conception d'Application d'Intelligence Artificielle, (SOACAIA) modulaires et clairement structurés, exécutables sur des plates-formes informatiques distribuées pour parcourir, développer, rendre disponible et gérer des applications d'IA, ce jeu d'outils implémentant quatre fonctions :
Une fonction Studio permettant d'établir un espace partagé sécurisé et privé pour l'entreprise dans lequel l'équipe étendue des analystes commerciaux, des scientifiques de données («data scientist » en langue anglaise), des architectes d'application et des gestionnaires IT peuvent communiquer et travailler ensemble en collaboration ;
Une fonction Forge permettant d'industrialiser les instances d'IA et de rendre les modèles analytiques et leurs jeux de données associés disponibles par un catalogue aux équipes de développement sous réserve du respect des conditions de sécurité et de conformité de traitement ;
Une fonction Orchestrateur pour gérer la mise en œuvre totale des instances d'IA conçues par la fonction STUDIO et industrialisée par la fonction Forge et pour effectuer la gestion permanente sur une infrastructure hybride de nuage ;
Une fonction de moteur d'apprentissage machine rapide FMLE (FastML Engine, «Fast Machine Learning Engine » en langue anglaise) qui est une boîte à outils d'apprentissage machine pour calculateurs hautes performances HPC et infrastructures hybrides facilitant l'utilisation des puissances de calcul et les possibilités de groupes (« clusters » en langue anglaise) de calculateurs hautes performances en tant que support d'exécution des modèles d'entrainement d'apprentissage machine et spécialement des modèles d'entrainement d'apprentissage profond.

Selon une particularité, la fonction moteur d'apprentissage machine rapide (FastMLE) comporte une interface qui a pour objectif, lors de son exécution sur une plateforme, de faciliter la phase de conception et de mise au point des modèles d'apprentissage machine (Machine Learning Models) ; lorsqu'un premier jet de ce modèle est réalisé, il convient alors de l'entrainer sur un ou plusieurs jeu(x) de données annotées (dataset) et de mettre au point le modèle ; afin d'entrainer son modèle, l'utilisateur « data scientist » doit utiliser au moins un fichier dataset comportant des données annotées, le module FastMLE permet de gérer les fichiers datasets existants, annotés et prêts à l'emploi, grâce à cette API ou à cette interface, le « data scientist » peut sélectionner un ou plusieurs des fichiers datasets et les charger sur l'infrastructure où doit s'exécuter l'entrainement de son modèle ou de les sauvegarder dans au moins une base de données exploitée par FastMLE.

Selon une variante de l'invention, la fonction moteur d'apprentissage machine rapide comporte une interface permettant à l'utilisateur :
De choisir dans un menu de créer au moins une « expérimentation » EX1, déclenchant un menu permettant d'associer le code d'un modèle M1, soit défini par l'utilisateur, soit parmi les différents modèles Mi mémorisés par le service, à un script de lancement SLi et à un framework FML j de ML (comme par exemple Tensorflow, ...) selon ses choix pour créer une association (par exemple, EX1, M1, SLi, FMLj ou EX2, Mi, SLi2 FMJ3) dont chacune est mémorisée dans la base de métadonnées de FastMLE et qui permettra de créer un conteneur respectif (EX1, EX2) au lancement d'un entrainement
De choisir dans un autre menu de créer et de lancer un « entraînement» E1 à exécuter sur son modèle, en associant une expérimentation EXk choisie parmi les expérimentations préalablement créées par exemple via la première étape, du catalogue Forge, à un dataset DSm (préalablement chargé sur l'infrastructure via FastMLE), et en option à des hyper paramètres selon les choix de l'utilisateur, l'association EXk, DSm se concrétisant par un conteneur (container), l'information de l'association étant mémorisée dans les métadonnées de FastMLE.

Ainsi l'entrainement se concrétise par le modèle qui est exécuté au sein d'un container créé au moment du lancement de l'entrainement, à partir des informations propres à l'expérimentation et des informations fournies au moment de la création de l'entrainement. Le conteneur est ce qui sera déployé sur les nœuds de l'infrastructure d'exécution et apporte toutes les librairies nécessaires à son exécution et va ingérer des données annotées (dataset) et des paramètres (hyperparamètres) de manière à ce que le modèle apprenne plus tard à prédire des événements sur des datasets non annotés.

Selon une autre variante, la fonction moteur d'apprentissage machine rapide permet qu'un conteneur soit exécuté sur un cluster de haute performance ayant des ressources CPU, RAM, GPUs telles que mentionnées par le « data scientist » dans l'utilisation de FastMLE au moment de la création de l'entrainement (deuxième étape).

Selon une autre variante, la fonction moteur d'apprentissage machine rapide contient une autre interface de FastMLE qui permet à l'utilisateur de superviser son entrainement, suivre son évolution (initialisation, en cours, terminé...) et le surveiller ou monitorer l'entrainement.

Selon une autre variante, le moteur FMLE nécessite :
Un planificateur (scheduler) qui gère toutes les ressources sur le groupe de machines pour permettre d'allouer des ressources à une ou plusieurs tâches (par exemple un entrainement qui sera matérialisé en job(s)) ;
Un système de gestion de conteneur (container) utilisé pour supporter les expérimentations d'apprentissage machine (ML/DL) et ainsi sécuriser leur exécution afin qu'ils ne soient accessibles que par l'utilisateur ou groupe ou entreprise ;
Un dépôt pour sauvegarder les images de conteneur (container) des environnements (frameworks) d'apprentissage profond qui sont utilisés pour lancer les expérimentations EX ;
Un système de fichiers distribués de type NFS pour partager les fichiers des datasets entre les expériences d'apprentissage machine (ML/DL).

Selon une autre variante, la fonction moteur d'apprentissage machine rapide associée dans un système, de préférence le système (SOACAIA) ci-dessus décrit, en utilisant les fonctionnalités de l'orchestrateur (de type Yorc par exemple), va permettre de générer au moins une tâche « job » HPC pour permettre l'exécution de chaque entrainement de chaque modèle.

Ainsi l'association de FastMLE et de Yorc (utilisé par fastMLE), permet de masquer à l'utilisateur, les tâches complexes qui auraient consisté à définir son programme d'exécution, à allouer les ressources nécessaires pour l'exécution, à y déployer son entrainement et à lancer le programme ...

Selon une variante, les applications d'IA sont rendues indépendantes des infrastructures de support par l'orchestration de la fonction orchestrateur basée sur TOSCA qui permet de construire des applications nativement transportables à travers les infrastructures.

Selon une autre variante de l'invention, la fonction STUDIO comprend un libre-service de développement d'applications cognitives, ledit libre-service de développement d'applications cognitives comprenant un service de gestion des catalogues et des applications et une interface utilisateur d'apprentissage en profondeur.

Selon une autre variante, la fonction STUDIO fournit deux fonctions :
Une première, de portail, donnant accès au catalogue de composants, permettant l'assemblage de composants en applications, (au standard TOSCA) et la gestion de leur déploiement sur des infrastructures variées et permettant de construire des applications complexes dans lesquelles se retrouve le modèle qui va servir pour la prédiction ;
Une seconde, d'IHM, et d'interface d'utilisateur du moteur (engine) FastMLE fournissant une interface graphique donnant accès aux fonctions de développement de modèles ML/DL du moteur FastMLE.

Selon une autre variante, le portail de la fonction STUDIO (au standard TOSCA) offre une boîte à outil pour la gestion, la conception, l'exécution et la génération d'applications et de données de test et comporte :
Deux interfaces graphiques, l'une permettant à l'utilisateur de définir chaque application au standard TOSCA à partir des composants du catalogue qui sont réunis par une action glisser-déposer et pour leur identification, l'utilisateur leur associe, par cette interface, des valeurs et des actions définissant leur cycle de vie ; et l'autre propre à FastMLE, à l'usage du data Scientist qui veut mettre au point ses modèles, à travers l'API de l'orchestrateur.

Un menu gestion qui permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en réunissant l'infrastructure sur laquelle l'application sera exécutée par une action glisser-déposer dans un ou plusieurs objets « compute » définissant le choix du type de calculateur.

Selon une autre variante, la fonction Forge comprend des modèles pré-entrainés mémorisés dans le système et accessibles à l'utilisateur par une interface de sélection, pour permettre l'apprentissage de transfert, des cas d'usage pour le développement rapide de bout en bout, des composants technologiques ainsi que pour instaurer les environnements spécifiques des utilisateurs et les cas d'usages.

Selon une autre variante, la fonction Forge comprend un module de programme qui, exécuté sur un serveur, permet de créer un espace de travail privé commun à une entreprise ou un groupe d'utilisateurs accrédités pour stocker, partager, retrouver et mettre à jour de façon sécurisée (par exemple après authentification des utilisateurs et vérification des droits d'accès (« credentials »), des plans de composants, des environnements d'apprentissages profonds (« Deep Learning Frameworks »), des jeux de données et des modèles entrainés et constituant un entrepôt pour les composants analytiques, les modèles et les jeux de données.

Selon une autre variante, la fonction Forge comprend un module de programme et une interface IHM permettant de gérer un catalogue de jeux de données « datasets », ainsi qu'un catalogue de modèles et un catalogue des environnements de développement de modèle de « frameworks » (en langue anglaise) (Fmks) disponibles pour le service, apportant ainsi une facilité supplémentaire au data Scientist.

Selon une autre variante, la fonction Forge propose un catalogue donnant accès à des composants :
De type Machine Learning, comme les frameworks ML (e.g. Tensorflow*), mais aussi les modèles et les datasets ;
De type Big Data Analytics (e.g. la suite Elastic*, les distribution Hadoop*...) pour les datasets ;
Des Outils de développement (Jupyter*, R*, Python*...) ;
Des outils d'analyse de données ;
Des outils statistiques.

Selon une autre variante, la fonction Forge est un catalogue donnant accès aussi à des (blueprints) schémas directeur d'application (templates).

Selon une autre variante, le principe de fonctionnement de la fonction orchestrateur réalisée par un module de programme Yorc recevant une application TOSCA* telle que décrite ci-dessus (appelée aussi topologie), est d'allouer les ressources physiques correspondant au composant «Compute» (compute étant une ressource de calcul abstraite correspondant à une grosseur de calcul qui, après la mise en cohérence des informations (« mapping » en langue anglaise) et en fonction des configurations, peut être une machine virtuelle, un nœud physique...), puis d'installer sur cette ressource les logiciels spécifiés dans TOSCA pour ce composant «Compute», et de déployer des conteneurs « Docker » contenant les programmes d'entrainement des modèles et d'y associer les fichiers de jeux de données « datasets » montés via les volumes spécifiés dans «DockerVolume» pour ce composant« Compute ».

Selon une autre variante, le déploiement d'une telle application (au standard TOSCA) par l'orchestrateur Yorc, s'effectue en utilisant le plugin Slurm de l'orchestrateur qui va déclencher la planification d'une ou de plusieurs tâches slurm (scheduling d'un job slurm), chacune pour un entrainement Ei d'un utilisateur sur une grappe (cluster) de calculateur haute performance HPC ou sur un nuage.

Selon une autre variante, l'orchestrateur Yorc surveille pour chaque utilisateur les ressources disponibles de chaque super calculateur ou de chaque nuage et, lorsque les ressources requises seront disponibles, un nœud de supercalculateur ou d'un nuage sera alloué (correspondant au composant Compute de TOSCA), le conteneur « Dockercontainer » sera installé sur un ou plusieurs nœuds de ce supercalculateur et les volumes correspondant aux données en entrée et sortie seront montés dans le conteneur (via le « DockerVolume »), puis l'exécution du conteneur effectuée.

Selon une autre variante, la fonction Orchestrateur (orchestrator) propose à l'utilisateur des connecteurs pour gérer les applications sur différentes infrastructures, soit en Infrastructure en tant que Service (Infrastructure as a Service IaaS) (telles que par exemple, AWS*, GCP*, Openstack*, ...), soit en Conteneur en tant que Service (Container as a Service CaaS) (telles que par exemple, Kubernetes*), soit en Calcul Haute Performance HPC (telles que par exemple, Slurm*, PBS*).

L'invention concerne également l'utilisation du système selon l'une des particularités décrites ci-dessus pour la constitution de cas d'usage, qui permettront notamment d'enrichir la collection de « blueprints » et de composants de Forge (catalogue) : Les premiers cas d'usage identifiés étant :
La cyber sécurité, avec l'utilisation de l'IA pour les centres d'opérations de sécurité prescriptifs (Prescriptive SOC (« Security Opération Center » en langue anglaise)) ;
Le centre de données cognitifs (« Cognitive Data Center »(CDC) en langue anglaise) avec utilisation de l'IA pour de la maintenance prédictive;
La vision par ordinateur, avec des applications IA de vidéo surveillance ;
L'invention concerne également l'utilisation du système selon l'une des particularités décrites ci-dessus pour exploiter et sauvegarder des données dans une base de données enrichie mémorisant également les métadonnées.

L'invention concerne en outre un procédé de développement, d'enregistrement, de traitement, d'analyse de modèles et de données utilisant le système décrit précédemment comportant au moins l'une des étapes suivantes :
Création d'un nouveau modèle développé [I]
Sauvegarde du nouveau modèle développé [II] dans la base des nouveaux modèles sauvegardés
Chargement du (des) jeu(x)de données pour le ou les entrainement(s) [III]
Chargement du nouveau modèle pour le ou les entrainement(s) [IV]
Chargement de l'environnement d'apprentissage (ML/DL) [V]
Lancement d'un ou plusieurs entrainement(s), avec déploiement et gestion automatique de l'exécution par l'orchestrateur [VI]
Réglage du nouveau modèle [VII]
Sauvegarde du modèle entrainé [VIII]
Déploiement sur un serveur du site d'exploitation du modèle entrainé pour inférence [IX]
Acquisition par le système dans sa base de données opérationnelle des données opérationnelles enrichissant les jeux de données [X] nécessaires à l'amélioration de la qualité des modèles issus de l'entrainement.

En fait, le modèle lui-même (code dans un conteneur en général) est stocké dans la Forge (ou catalogue), et dans la base de méta données de FastMLE on a ainsi les informations relatives à ce modèle (au sein d'une expérimentation). Le modèle entrainé fait partie des résultats (outputs) de l'entrainement, il est dans un espace persistant; aujourd'hui c'est l'utilisateur qui le sauvegarde dans le catalogue, mais seulement à partir du moment où il considère qu'il est au point, et non pas à chaque entrainement.

### PRESENTATION DES FIGURES

D'autres caractéristiques et avantages de l'invention apparaîtront à la lecture de la description détaillée des modes de réalisation de l'invention, donnés à titre d'exemple uniquement, et en référence aux dessins qui montrent :
[Fig. 1] représente un schéma de l'architecture d'ensemble du système utilisant une suite d'outils modulaires selon un mode de réalisation.
[Fig. 2] représente un schéma de détaillé, montrant le cycle de vie du développement d'un outil travail d'un utilisateur (par exemple le « Data scientist »).

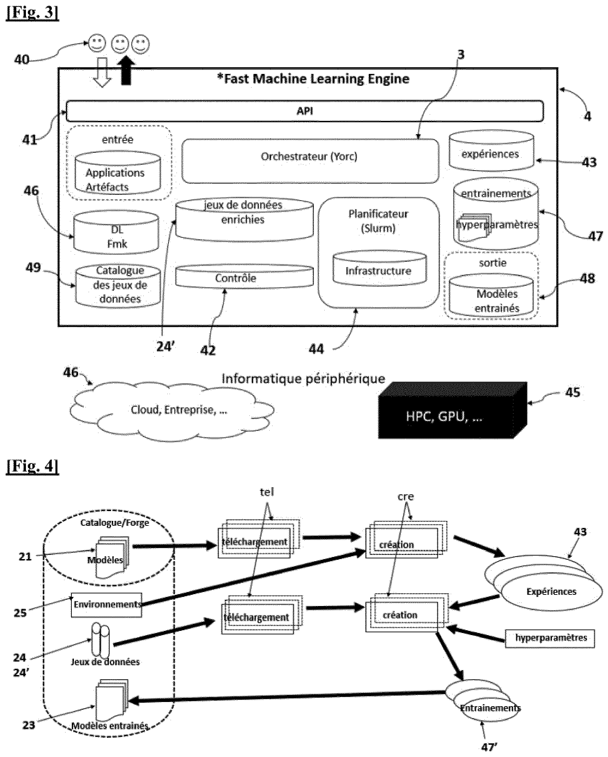

[Fig. 3] représente un schéma de l'architecture détaillée du moteur FastMLE.
[Fig. 4] représente un schéma des étapes (« workflow » en langue anglaise) de développement associé à FastMLE et son API.

### DESCRIPTION DETAILLE D'UNE FORME DE REALISATION DE L'INVENTION

Les figures exposent l'invention de manière détaillée pour permettre sa mise en œuvre. De nombreuses combinaisons peuvent être envisagées sans s'écarter de la portée de l'invention. Les modes de réalisation décrits s'attachent plus particulièrement à un exemple de mise en œuvre de l'invention dans le contexte d'un système (utilisant une suite d'outils modulaires et clairement structurée exécutable sur des plates-formes informatiques distribuées) et d'une utilisation dudit système pour simplifier, améliorer et optimiser la création et l'utilisation d'applications d'intelligence artificielle. Cependant, toute mise en œuvre dans un contexte différent, en particulier pour tout type d'application d'analyse de données, est également visée par la présente invention.

[Fig. 2] est une représentation schématique détaillée, montrant le cycle de vie du développement d'un outil de travail d'un utilisateur (par exemple le « Data scientist »), développant, mettant au point, et déployant un modèle et les différentes interactions entre les modules grâce à la mise en œuvre de certains modes de réalisation de la présente invention.

L'invention concerne également l'utilisation du système selon l'une des particularités décrites ci-dessus pour exploiter et sauvegarder des données dans une base de données enrichie (49) mémorisant également les métadonnées.

L'invention concerne en outre un procédé de développement, d'enregistrement, de traitement, d'analyse de modèles et de données utilisant le système selon l'une des particularités décrites ci-dessus, comportant au moins l'une des étapes illustrées par [Fig. 2] et détaillée telle que suit :
Création d'un nouveau modèle développé [I]
Sauvegarde du nouveau modèle développé [II] dans la base (21) des nouveaux modèles sauvegardés. Le modèle est codé en général dans un conteneur et stocké dans la Forge (ou catalogue). Dans la base de méta données de FastMLE, les informations relatives à ce modèle sont disponibles au sein d'une expérimentation
Chargement du (des) jeu(x)de données pour le ou les entrainement(s) [III]
Chargement du nouveau modèle pour le ou les entrainement(s) [IV]
Chargement des environnements d'apprentissage (ML/DL) [V] (5). Ces environnements (fmks) sont précisés/spécifiés soit au moment de la création de l'expérimentation, soit au moment du chargement du modèle ; ensuite ils sont chargés par l'orchestrateur au moment du lancement des entrainements (« trainings » en langue anglaise).

Réglage du nouveau modèle [VII]. L'utilisateur peut régler son modèle en fonction des résultats de l'entrainement dudit modèle. Par itérations successives de lancement d'entrainements avec des hyper paramètres différents, des modifications de code, il peut affiner ce réglage en jouant sur des paramètres, par exemple une précision optimale souhaitée du minimum de la fonction objectif avec le jeu de données test, le temps de convergence de l'algorithme. Ce réglage peut également être automatisé avec un algorithme approprié.

Sauvegarde du modèle entrainé [VIII] dans la Forge (2). Le modèle entrainé fait partie des résultats de l'entrainement. Disponible dans un espace persistant, l'utilisateur peut le sauvegarder dans le catalogue des modèles entrainés s'il est satisfait par la qualité des résultats de l'entrainement.

Déploiement sur un serveur du site d'exploitation du modèle entrainé pour inférence [IX].

Acquisition par le système dans sa base de données opérationnelle des données opérationnelles enrichissant les jeux de données (8) nécessaires à l'amélioration de la qualité des modèles issus de l'entrainement [X].

L'/Les utilisateur(s) (40) a/ont au moins quatre fonctions (STUDIO, FORGE, FastMLE et ORCHESTRATION) qui concourent à la solution d'un problème qu'ils souhaitent résoudre (par exemple quel est le modèle permettant d'identifier les spams dans un jeux de données (emails, ...). De manière non limitative, ils/il ont/a la possibilité pour arriver à leurs fins de créer (cre) au moins une expérience (43) au moins un entrainement (47) en choisissant (tel) au moins un modèle sauvegardé (21) ou s'il souhaite re-entrainer un modèle (23) déjà entrainé, au moins un jeu de données (24 ;24') au moins un environnement d'apprentissage (ML/DL) (25).

Selon une autre variante, l'/les utilisateur(s) (40) a/ont de manière non limitative la possibilité soit de développer au moins un nouveau modèle qu'il(s) sauvegarde(nt) dans la base (21) des nouveaux modèles sauvegardés, de choisir au moins un jeu de données (24 ;24'), au moins un environnement d'apprentissage (ML/DL) (25).

Selon une autre variante, l'/les utilisateur(s) (40) a/ont de manière non limitative la possibilité de soumettre au moins un entrainement (47) de modèle, et de sauvegarder le ou les modèles entrainés résultants dans la base (23) des modèles entrainés.

Selon une autre variante, l'/les utilisateur(s) (40) a/ont de manière non limitative la possibilité de déployer au moins un modèle entrainé pour au moins une inférence

Selon une variante, l'utilisateur (40) a de manière non limitative la possibilité de choisir au moins un modèle sauvegardé (entrainé) (23) ou un nouveau modèle (21), plusieurs jeux de données, au moins un environnement d'apprentissage (ML/DL) et soumettre au moins un entrainement avec un réglage d'hyper paramètre particulier

L'orchestrateur (3) facilite et accélère le processus en planifiant, optimisant et automatisant l'exécution des taches sur les clusters. L'utilisateur (40) accède à au moins un CPU et au moins un GPU et a, entre autres, la possibilité de soumettre une pluralité d'entrainements et/ou de réglage des hyperparamètres etc.

La suite d'outils modulaires, clairement structurée, et exécutable sur des plates-formes informatiques distribuées comporte :
Illustré par [Fig. 1] un système utilisant une suite d 'outils d'aide à la conception d'application d'Intelligence Artificielle, (SOACAIA) modulaires et clairement structurés, exécutables sur des plates-formes informatiques distribuées (cloud, cluster) ou non (HPC(cluster de milliers de nœuds propice à l'exécution de programmes en parallèles)) pour parcourir, développer, rendre disponible et gérer des applications d'IA, ce jeu d'outils implémentant quatre fonctions réparties dans trois espaces fonctionnels
Une fonction Studio (1) qui permet d'établir un espace de travail partagé sécurisé et privé pour l'entreprise dans lequel l'équipe étendue des analystes commerciaux, des scientifiques de données (« data scientists » en langue anglaise), des architectes d'application et des gestionnaires IT accrédités sur le système par l'entreprise peuvent communiquer , travailler ensemble en collaboration, stocker, partager, récupérer, mettre à jour les outils dont ils ont besoin pour le succès d'une, de plusieurs tâches ou d'un projet.

Dans une variante, les utilisateurs ont à disposition des catalogues de composants qu'ils peuvent enrichir, pour les échanger avec d'autres utilisateurs de l'espace de travail (22) et s'en servir pour accélérer les tests des prototypes, valider plus rapidement les modèles et le concept.

En outre, dans une autre variante la fonction Studio (1) permet d'explorer, de développer rapidement et aussi de déployer plus facilement sur plusieurs plates-formes informatiques distribuées ou non. La fonction Studio permet en outre, grâce à son interface donnant accès à l'orchestrateur (3), de piloter celui-ci. L'utilisateur voit le catalogue des composants que l'orchestrateur est capable de déployer. La fonction Studio donne une possibilité d'accélérer les entrainements des modèles en automatisant l'exécution des jobs, de choisir ses infrastructures, d'assembler des composants logiciels et lancer leur déploiement. La qualité du travail est non seulement améliorée mais aussi facilitée.

Selon une variante, la fonction STUDIO (1) comprend un libre-service de développement d'application cognitive (11). Ledit libre-service de développement d'application cognitive comprend deux parties :
Le portail qui permet de naviguer dans le catalogue de composants, de composer puis déployer les applications (assemblage de composants) appelé service de gestionnaire des catalogues et service gestionnaire des applications (12), ciblant de préférence les spécialistes des réseaux et des données (data engineers) ;
L'IHM qui est un module dédié au développement de modèles IA appelé interface utilisateur d'apprentissage (13), ciblant de préférence les data scientists.

Une variante de la fonction STUDIO (1) fournit une première fonction de portail qui donne accès au catalogue de composants, pour permettre l'assemblage de composants en application de préférence au standard TOSCA (TOSCA pour « Topology & Orchestration Spécification for Cloud Application » en langue anglaise) et gère leur déploiement sur des infrastructures variées. Le standard TOSCA est un langage standard connu de l'homme du métier et comprend des spécifications décrivant les processus de gestion du cycle de vie incluant création, démarrage, arrêt ou de modification de services (par exemple les services Web).

Une variante de la fonction STUDIO (1) offre une boîte à outils pour la gestion, la conception, l'exécution et la génération d'applications et comporte :
Deux interfaces graphiques, l'une permettant à l'utilisateur de définir chaque application au standard TOSCA à partir des composants du catalogue qui sont réunis par une action glisser-déposer pour leur identification, l'utilisateur leur associe, par cette interface, des valeurs et des actions définissant leur cycle de vie (par exemple on peut lier un composant dans un conteneur (Dockercontainer) auquel on peut associer par cette interface des volumes correspondant aux données à traiter en entrée et en sortie) de préférence réservés à l'administrateur; et l'autre pour la mise au point du(des) modèle(s) réservée(s) de préférence à l'usage du data scientist ;
Un menu gestion permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en réunissant l'infrastructure sur laquelle l'application sera exécutée par une action glisser-déposer dans un objet représentant un composant «compute» définissant le type de calculateur. Une autre action représentant/définissant le type de nœud de calculateur (type de calculateur : représente un nœud physique ou une VM ... pour définir une ressource de calcul abstraite qui, une fois mappée par l'orchestrateur, devient une réelle ressource physique utilisée pour le déploiement).

Pour ceci, on glisse les composants d'applications dans un ou plusieurs composants abstraits "compute", la description de l'application étant ainsi indépendante de l'infrastructure de déploiement. Puis dans une deuxième phase d'utilisation de ce portail l'utilisateur fait correspondre (map) ces composants abstraits (computes) avec des infrastructures concrètes (Machines virtuelles, Cloud, nœud physiques ...).

Une variante de la fonction STUDIO (1) est de fournir l'accès à un moteur d'apprentissage qui permet de gérer les phases d'entrainement de modèle (ML/DL) sur différents types de ressources (par exemple les ressources de calcul intensif...).

Construite sur les principes de réutilisation des meilleures pratiques, la fonction Forge (2) contribue à la mise en place d'un espace de travail hautement collaboratif, permettant aux équipes d'utilisateurs spécialistes de travailler ensemble de manière optimale. Forge est la matérialisation du catalogue de composants partageables.

Dans une variante, la fonction Forge (2) fournit un accès structuré à un référentiel croissant de composants analytiques, et met à disposition des équipes d'utilisateurs accrédités les modèles d'analyse et leurs jeux de données associés. Ceci encourage la réutilisation et l'adaptation des données pour une productivité maximale et permet d'accélérer la production tout en minimisant les coûts et les risques.

Selon une variante, la fonction Forge (2) est une zone de stockage, un entrepôt pour les composants analytiques, les modèles (nouveaux (21) et entrainés (23)) et les datasets (24).

Dans une autre variante cette fonction Forge (2) joue aussi le rôle de catalogue donnant accès à des composants constituant des Outils de développement (27) (Jupyter*, R*, Python*...), des outils statistiques (28) (Kibana, ElasticSearch from Elastic stack ..), des outils d'analyse de données (26) (MySQL, Hadoop, ElasticStack, ...) ou de catalogue donnant accès aussi à des (blueprints) schémas directeur d'application (templates) Composants applicatifs (comprenant notamment un modèle entrainé, mais aussi d'autres applicatifs : on stocke des topologies («template») définissant un pré-assemblage de composants permettant d'aller plus vite pour le déploiement : catalogue avancé d'applicatifs métiers pré-assemblés «blueprint ».

Dans une variante, la fonction Forge (2) comprend également des modèles pré-entrainés mémorisés dans le système et accessibles à l'utilisateur par une interface de sélection, pour permettre l'apprentissage de transfert « transfer learning », des cas d'usage pour le développement rapide de bout en bout, des composants technologiques ainsi que pour instaurer les environnements spécifiques des utilisateurs et les cas d'usages. L'apprentissage de transfert dans le cadre de cette invention consiste en ce que, une fois entrainés par les développeurs, les modèles sont accessibles dans un catalogue pour leur réutilisation par un utilisateur sur d'autres jeux de données (exemple de modèle reconnaissant des bateaux qui est réutilisé pour reconnaitre des voitures).

Dans une variante supplémentaire la fonction Forge (2) comprend un module de programme qui, exécuté sur un serveur ou une machine, permet de créer un espace de travail privé (22) commun à une entreprise ou un groupe d'utilisateurs accrédités pour stocker, partager, récupérer et mettre à jour de façon sécurisée (par exemple après authentification des utilisateurs et vérification des droits d'accès (credentials)), des plans de composants, des environnements d'apprentissage en profondeur (Deep Learning Frameworks), des jeux de données (datasets) et des modèles entrainés et constituant un entrepôt pour les composants analytiques, les modèles et les jeux de données.

Dans une autre variante, la fonction Forge permet à tous les membres d'une équipe projet de collaborer sur le développement d'une application. Cela améliore la qualité et la rapidité de développement des nouvelles applications en ligne avec les attentes des métiers.

Une variante de la fonction Forge (2) comprend en plus un module de programme et une interface IHM permettant de gérer un catalogue de datasets, ainsi qu'un catalogue de modèles et un catalogue des environnements de développement de modèles, par exemple des frameworks (Fmks) tels que tensorflow, keras, etc. disponibles pour le service, apportant ainsi une facilité supplémentaire aux utilisateurs de préférence au Data Scientist.

Dans une autre variante, la fonction Forge met à disposition un nouveau modèle dérivé d'un modèle précédemment qualifié.

Dans une autre variante, la fonction Forge met à disposition des utilisateurs accrédités un catalogue donnant accès à au moins un type de composants parmi les composants:
De type Machine Learning, comme les frameworks ML (e.g. Tensorflow*), mais aussi les modèles et les datasets ; ou
De type Big Data Analytics (e.g. la suite Elastic*, les distribution Hadoop*...).

En particulier, la fonction Forge permet d'offrir non seulement des modèles de réseaux de neurones mais aussi, un catalogue d'outils d'analyse.

Dans une variante, la fonction Forge permet d'industrialiser des composants d'IA, en effet elle permet de rendre les modèles IA et leurs jeux de données associés disponibles aux équipes et utilisateurs accrédités. La mise au point d'un modèle se fait sur des datasets annotés, via les fonctions du système SOACAIA (notamment la partie Moteur d'apprentissage profond) ; Le(s) modèle(s) entrainé(s) résultant(s) et le(s) dataset(s) annoté(s) associé(s) est (sont) stocké(s) dans la Forge et à disposition des utilisateurs qui veulent s'en servir.

Les tâches de développement et de déploiement lors de l'apprentissage en profondeur sont très complexes. De nombreuses étapes sont nécessaires à l'entrainement de modèles.

L'utilisateur (40) (data scientist, par exemple) y consacre beaucoup de temps. La fonction de moteur d'apprentissage machine rapide FMLE (« FastML Engine » (4)) par sa boîte à outil d'apprentissage machine, pour calculateurs hautes performances HPC (45) et infrastructures hybrides (46), masque la complexité de la gestion des tâches en s'appuyant sur l'orchestrateur (3) pour planifier et automatiser par lot les tâches. Ainsi, il donne aux utilisateurs l'accès aux outils spécifiques d'automatisation par lot (« batch » en langue anglaise) et de l'ordonnancement (« job scheduling » en langue anglaise).

FastML Engine (4) facilite l'utilisation des puissances de calcul et les possibilités des groupes (clusters) de calculateurs hautes performances en tant que support d'exécution des modèles d'entrainement d'apprentissage machine (ML/DL). Ceci, notamment pour les modèles d'entrainement d'apprentissage profond en fournissant de nombreuses fonctionnalités et outils (par exemple les jeux de données nécessaires aux entrainements des modèles peuvent quand l'utilisateur le souhaite, être chargés du bureau de l'utilisateur accrédité vers le serveur exécutant la fonction de moteur d'apprentissage machine rapide FMLE « FastML Engine » qui peut être utilisée pour les entrainements de modèles ...).

Par cette mise à disposition de ces diverses options, le moteur d'apprentissage machine rapide « FastML Engine » simplifie et accélère les processus, en permettant aux utilisateurs de configurer le système afin de lancer, grâce à une seule opération de configuration, une multitude d'expériences en parallèle sur une pluralité de modules d'IA (modèle DL, ML, outils statistiques etc.) sélectionnables, avec une pluralité de jeux de données sélectionnables.

Ainsi, le système alloue automatiquement des ressources de calcul adaptées pour chaque entrainement (notamment à l'aide des paramètres d'apprentissage (« trainings » en langue anglaise) comme par exemple le nombre de CPU/GPU requis, permettant au système de déterminer comment allouer ces ressources), ce qui permet à l'utilisateur data scientist par exemple de gagner du temps et se concentrer sur sa principale tâche d'analyse.

L'utilisateur peut soumettre plusieurs entrainements d'un modèle et comparer les résultats issus de chaque entrainement.

D'ailleurs, dans certains modes de réalisation, cette analyse comparative des résultats des différents modèles testés pendant les divers entrainements pourra être automatisée, grâce à une supervision automatique des résultats des modèles, par exemple, à l'aide d'outils statistiques ou d'autres types de modèles entraînés pour une telle discrimination des résultats. Ainsi, le système fournira une sélection automatisée (optimisée) des meilleurs modèles parmi les expériences configurées et entrainements soumis par les utilisateurs du moteur Fast MLE.

Dans certains modes de réalisation, la fonction moteur d'apprentissage machine rapide (FastML Engine) comporte une API (41) (interface de programmation applicative) qui a pour objectif, lors de son exécution sur une plateforme, de faciliter la phase de conception et de mise au point des modèles d'apprentissage machine (Machine Learning Models) lorsqu'un premier jet de ce modèle est réalisé, ce modèle doit alors être entrainé sur un ou plusieurs jeu de données annotées (datasets) afin d'être mis au point.

Afin d'entrainer son modèle, l'utilisateur « data scientist » doit utiliser au moins un fichier dataset comportant des données annotées, le module FastMLE permet de gérer les fichiers datasets existants, annotés et prêts à l'emploi, grâce à cette API (41) le « data scientist » peut sélectionner un ou plusieurs des fichiers datasets et les charger sur l'infrastructure où doit s'exécuter l'entrainement de son modèle.

L'API (41) de niveau élevé, facilite ainsi le développement des applications.

Ainsi le moteur FastML Engine» simplifie et accélère les processus, en permettant aux utilisateurs de configurer le système afin de lancer, grâce à une seule opération de configuration, une multitude d'expériences en parallèle sur une pluralité de modules d'IA (par exemple sans limitations, les modèles DL, ML, les outils statistiques etc.) sélectionnables, avec une pluralité de jeux de données sélectionnables. FastML permettant de traiter du machine learning (ML/DL), mais via les conteneurs docker, on peut lui faire exécuter ce que l'on veut.

Lorsque ces modules d'IA concernent des modèles d'apprentissage profond (Deep Learning Models - DL), l'utilisateur dispose des options de gestion des entrainements, des modèles, des jeux de données, des environnements, des ressources et des inférences. L'utilisateur peut accéder à toutes les fonctions du système soit via l'API de haut niveau (4) du moteur FastMLE, soit à travers le Studio (1). L'API de haut niveau (4) fournit les fonctions du système, et le Studio (1) les rend accessibles de façon graphique La fonction Orchestrateur (3) lui donne la possibilité de déployer un ou plusieurs entrainements sur les ressources adéquates et la fonction Studio (1) lui permet de soumettre, supprimer, ajouter, ou enregistrer une ou plusieurs tâches « jobs » de son choix.

Ces deux fonctions permettent à l'utilisateur (data scientist par exemple) d'automatiser un ensemble de tâches de faible valeur ajoutée pour ledit utilisateur en configurant puis soumettant comme, par exemple, un ou une pluralité d'entrainements de modèles.

Lorsque ces modules d'IA concernent d'autres types d'outils de modélisation/simulation/calcul intensif tels par exemple des outils statistiques, - d'analyse de données, de simulation météo, crash test, etc. l'utilisateur dispose d'un ensemble de fonctions statistiques, d'analyse, etc. applicables aux jeux de données. L'utilisateur a la possibilité à travers l'IHM donnant accès à ces modules d'IA, d'implémenter de nouvelles fonctions pour enrichir la base disponible de ces fonctions statistiques, d'analyse de données etc. ou pour s'en servir. Les tâches «jobs» d'analyse et de traitement statistiques etc. une fois configurées peuvent être déployées vers la ressource ou les ressources adéquates. Les résultats obtenus sont sauvegardés dans la base de données annotés de Forge (2) et à disposition des utilisateurs accrédités.

L'utilisateur a ainsi à disposition une API de haut niveau homogène qui lors de son exécution permet d'accéder à des ensembles d'outils disponibles (les environnements, des modèles, des jeux de données ...), de gérer et automatiser les entrainements de ces modèles, de comparer les résultats des différents types de modules sur une ou plusieurs sélections de jeux de données. Ainsi, tout en simplifiant la tâche, l'API améliore la qualité des résultats et facilite les échanges.

Et dans tous les cas, il se passe qu'on peut comparer les résultats de ces différents types de modules sur une même sélection de jeux de données.

Selon une variante de l'invention, la fonction moteur d'apprentissage machine rapide comporte une interface permettant à l'utilisateur :
De choisir dans un menu de créer au moins une «expérimentation» EX1, déclenchant un menu permettant d'associer le code d'un modèle M1, soit défini par l'utilisateur soit parmi les différents modèles Mi mémorisés par le service, à un script de lancement SLi et à un framework FML j de ML (comme par exemple Tensorflow, ...) selon ses choix pour créer une association (par exemple, EX1, M1, SLi, FMLj ou EX2, Mi, SLi2 FMLj2 et chaque association est mémorisée dans la base (24') du moteur FastMLE.

L'expérimentation dans le cadre du moteur FastMLE consiste à spécifier les différents éléments (le répertoire contenant le code nécessaire pour initialiser et lancer un entrainement de modèles, un point d'entrée de script (le script principal pour un entrainement), l'environnement dans lequel est supporté le ou les entrainements, les données) qui seront utilisés pour l'entrainement de modèle. Un ou plusieurs entrainements peuvent être lancés en utilisant le même ou les mêmes éléments d'une ou plusieurs expérience(s).

De choisir dans un autre menu de créer et de lancer un « entrainement » E1 à exécuter sur son modèle, en associant une expérimentation EXk choisie parmi les expérimentations dans la base de méta données de FastMLE (l'expérimentation ayant été définie (et son script préchargé) via FastMLE. Pour le moment les expérimentations ne sont pas vraiment dans la forge, mais dans la base de méta données de FastMLE) à un dataset DSm (préalablement chargé sur l'infrastructure via FastMLE), et en option à des hyper paramètres selon les choix de l'utilisateur, l'association EXk, DSm étant mémorisée dans la base du moteur FastMLE.

Ceci donne la possibilité d'accélérer les entrainements. La performance (rapidité de convergence vers un modèle entrainé efficace) et la qualité du résultat d'un entrainement sont dépendantes des hyperparamètres choisis. Les hyperparamètres (par exemple, dans le cas du DL sont : le learning rate, le batch size, le momentum, le weight decay) ce sont des paramètres d'ajustement des algorithmes bien connus par l'homme du métier. La robustesse des algorithmes en dépend. C'est un paramètre dont la valeur est définie avant le démarrage de l'apprentissage, qui est utilisé pour contrôler le processus d'apprentissage. Le bon réglage de ces hyperparamètres est en général difficile (notamment en raison du vaste espace de recherche) et déterminant pour obtenir de meilleurs résultats d'entrainement de modèles dans un laps de temps convenable. Les critères permettant de mettre fin au réglage sont des valeurs de précision du modèle qui sont calculées au cours de l'apprentissage (pendant la phase de test du modèle) Dans la pratique ce réglage est chronophage et l'utilisateur y consacre une importante partie de son temps. Le système offre la possibilité de créer/lancer facilement une pluralité d'apprentissages monitorer, éventuellement en parallèle, en changeant les valeurs des hyperparamètres ainsi, on facilite et accélère le réglage (« tuning » en langue anglaise) manuel de ces derniers. Ce réglage des hyperparamètres peut également être automatique (grâce à l'orchestrateur qui va permettre de déployer un faisceau d'entrainements avec un champ de valeur d'hyper paramètres) en utilisant de manière non limitative des algorithmes appropriés dont le critère de convergence accepté est par exemple la précision recherchée pendant la phase de test sur un jeu de données annotés.

Ceci donne un avantage significatif donnant la possibilité, en lançant une multitude d'entrainements d'un modèle, de régler les hyperparamètres (47) dudit modèle. L'utilisateur peut se servir des éléments d'une expérience, pour y adjoindre via l'API de studio (1) ou à travers une interface en ligne de commande (« Command line interface » (CLI) en langue anglaise) des paramètres supplémentaires à disposition tels que : ram, gpu, hyperparamètres, ... et lancer grâce à FastMLE un entrainement. L'utilisateur supervise l'entrainement et a la possibilité de sauvegarder au moins le modèle entrainé qui en résulte dans la base FastMLE des modèles entrainés (48).

L'utilisateur accrédité a donc possibilité, en naviguant sur son terminal parmi les diverses options à disposition (création, édition, affichage, sauvegarde, suppression, ...), de choisir ou de mettre à disposition d'autres utilisateurs, soit des jeux de données (43), soit les modèles entrainés (48), soit des expérimentations ou «modèles d'apprentissages », soit des environnements de ML/DL (46), et ainsi d'optimiser l'efficacité et la qualité des résultats.

Selon une autre variante, la fonction moteur d'apprentissage machine rapide permet qu'un conteneur soit exécuté sur un cluster de haute performance ayant des ressources CPU, RAM, GPUs telles que mentionnées par le « data scientist ». Dans les conteneurs se trouvent les ressources logicielles nécessaires à l'exécution d'un job. Le conteneur est créé lorsqu'on lance un entrainement, à partir des informations propres à l'expérimentation(s) et des informations fournies au moment de la création de l'entrainement. Ces informations (par exemple l'information de savoir où se trouve un dataset, pas le dataset lui-même, l'information qu'une expérience utilise tel conteneur Docker, pas l'image du conteneur elle-même...) qui sont les métadonnées FastMLE sont mémorisées dans une base de données. C'est le conteneur qui sera déployé sur les nœuds de l'infrastructure d'exécution (nœud physique, machine virtuelle, ...).

Les conteneurs permettent de résoudre les problèmes de fiabilité et portabilité des logiciels quand ils sont déplacés d'un environnement informatique à l'autre. Au moins un avantage de cette technique est de rendre abstraites les diverses différences existantes dans les infrastructures, les distributions, ...

Selon une autre variante, la fonction moteur d'apprentissage machine rapide contient une autre interface de FastMLE qui permet à l'utilisateur de superviser son entrainement (42), suivre son évolution (initialisation, en cours terminé...) et le surveiller ou monitorer.

Selon une autre variante, le moteur FMLE nécessite :
Un planificateur (44) (scheduler) qui gère toutes les ressources sur le groupe de machines pour permettre d'allouer des ressources à une ou plusieurs tâches (jobs) ;
Un système de gestion de conteneurs (container) utilisé pour supporter les expérimentations d'apprentissage profond et ainsi sécuriser leur exécution afin qu'ils ne soient accessibles que par l'utilisateur ou groupe ou entreprise ;
Un dépôt (46) pour sauvegarder les images de conteneur (container) des environnements (frameworks) d'apprentissage profond qui sont utilisés pour lancer les expérimentations EX ;
Un système de fichiers distribués (47) pour partager les fichiers des datasets entre les expériences d'apprentissage profond.

Selon une autre variante, la fonction moteur d'apprentissage machine rapide associée dans un système de préférence le système (SOACAIA) ci-dessus décrit, en utilisant les fonctionnalités de l'orchestrateur de préférence Yorc, va permettre de générer au moins une tâche « job » HPC pour permettre l'exécution de chaque entrainement de chaque modèle.

L'association de FastMLE et de Yorc, permet entre autres de masquer à l'utilisateur, les tâches complexes consistant à définir son programme d'exécution, d'allouer les ressources nécessaires, d'y déployer son entrainement et de le lancer.

Le moteur FastMLE offre la possibilité d'installer automatiquement les composants (Slurm, Docker, Docker registry, système de fichiers distribués, ...) nécessaires à son utilisation sous réserve de compatibilité. Ces composants permettent entre autres de gérer le déploiement sur les nœuds de calcul, de gérer les containeurs Dockers, de partager certains fichiers entre les nœuds. L'utilisateur principal peut accéder à tous les nœuds de calcul par connexion sécurisée (de préférence de type ssh bien connue de l'homme du métier), chaque nœud de calcul pouvant être accessible (connexion ssh) par l'utilisateur disposant de l'identifiant du nœud de calcul et du mot de passe correspondant.

L'utilisation de la fonction Orchestrateur (3) qui, gère la mise en œuvre totale des instances d'IA conçues par utilisation de la fonction STUDIO et industrialisée par la fonction Forge, effectue la gestion permanente du cycle de vie sur une infrastructure hybride de nuage.

Dans une autre variante, l'orchestrateur (3) alloue les ressources, déploie les jobs et lance leur exécution.

La mise au point d'un modèle nécessite d'importantes ressources de calcul. L'utilisation de l'orchestrateur pour déployer le job d'entrainement (par exemple sur un supercalculateur) est d'une importance majeure pour simplifier la tâche de l'utilisateur.

Dans une variante, l'orchestrateur (3) déploie le(s) modèle(s) développé(s) et/ou choisis (dans la base des modèles disponible) pour entrainement(s).

Selon une variante, l'orchestrateur Yorc peut surveiller les ressources disponibles, du super calculateur ou du nuage et, lorsque les ressources requises sont disponibles, un nœud du supercalculateur ou du nuage est alloué (correspondant au Compute TOSCA), dans le cas de l'utilisation par FastMLE, il s'appuie sur Slurm qui s'en charge et le fait tout seul. Le conteneur (Dockercontainer) est installé par l'orchestrateur dans ce supercalculateur ou sur ce nœud et les volumes correspondant aux données en entrée et sortie (DockerVolume) sont montés, puis l'exécution du conteneur effectuée.

Selon un autre variante, l'orchestrateur permet de modéliser (en TOSCA) et de gérer le déploiement d'applications sous forme de conteneurs Docker ; lorsque ces applications nécessitent d'accéder à des données, on peut modéliser en TOSCA un DockerVolume qui va permettre de monter un volume donnant accès à ces données depuis le conteneur qui sera déployé.

Selon une autre variante, on utilise ces DockerVolumes dans le cas des applications DL (trainings), ce qui permet d'accéder aux datasets.

Dans une autre variante, l'orchestrateur (3) est piloté directement à travers le libre-service de développement d'application cognitive de Studio (11). L'utilisateur a ici accès au catalogue des composants de l'orchestrateur et est capable de les déployer. Il peut alors y piocher ce qu'il souhaite comme composant, les assembler, choisir les infrastructures et lancer leur déploiement.

Dans une autre variante, le pilotage ci-dessus décrit est masqué/caché à l'utilisateur par FastMLE (4). C'est FastMLE (4) qui pilote l'orchestrateur sans passer par l'interface de développement d'application cognitive de Studio (11). Ici, l'utilisateur précise simplement ce dont il a besoin (par exemple CPU, GPU, mémoire...) selon le type de modèle (ML, DL) qu'il veut entrainer. L'orchestrateur à travers FastMLE alloue les ressources nécessaires, assure le déploiement et l'exécution de l'entrainement. Toutefois le système permet toujours à l'utilisateur (administrateur de préférence) de prendre la main (piloter directement) à travers l'interface (11) de Studio.

Dans une autre variante, l'orchestrateur (3) déploie le(s) modèle(s) entrainé(s) pour inférence.

Dans une autre variante, l'orchestrateur (3) déploie le(s) modèle(s) mis au point en production.

Selon une variante, le principe de fonctionnement de la fonction Orchestrateur réalisée par un module de programme Yorc recevant une application par exemple au standard TOSCA*(topologie), est :
L'allocation des ressources physiques du Cloud ou d'un HPC correspondant au(x) composant(s) Compute (en fonction des configurations cela peut être une machine virtuelle, un nœud physique...),
L'installation sur ces ressources des logiciels spécifiés dans l'application TOSCA pour ce(s) composant(s) « Compute », ici dans le cas d'une application FMLE, un conteneur Docker, et dans notre cas monter les volumes spécifiés pour ce Compute.

Dans le cas d'une application FastMLE, sa modélisation TOSCA générée par FastMLE va décrire un conteneur Docker sur lequel des volumes sont montés qui correspondent au(x) dataset(s) nécessaires à l'entrainement et aux sorties (résultats).

Dans une variante, le déploiement d'une telle application (au standard TOSCA) par l'orchestrateur Yorc, s'effectue en utilisant le plugin Slurm (outil de gestion d'allocation de ressource propre aux systèmes HPC... sur IBM ce sera un plugin LSF) de l'orchestrateur qui va déclencher la planification d'une tâche slurm (scheduling d'un job slurm) sur une grappe (cluster) de calculateur haute performance (HPC). Tandis que sur déploiement sur un cloud, on utilise plutôt Kubernetes ou d'autres outils spécifiques de déploiement de conteneur applicatif dans des environnements Cloud. Donc l'orchestrateur est flexible et donc évolutif car on peut changer le plugin en fonction de l'environnement /infrastructure sur lequel/laquelle on veut déployer.

La caractéristique clé de l'orchestrateur pour pouvoir déployer et lancer des trainings ML, est le support des jobs, pour pouvoir lancer des traitements de type « batch » (typique des trainings qu'on lance sur cluster HPC, mais aussi de tout batch HPC comme simulation...), cette fonction est couplée à un plugin SLURM de l'orchestrateur, qui permet de transformer ces « jobs » en tâches SLURM (un des ressources scheduler HPC connus).

Dans une autre variante, la fonction Orchestrateur (orchestrator) propose à l'utilisateur des connecteurs pour gérer les applications sur différentes infrastructures soit en Infrastructure en tant que Service (Infrastructure as a Service IaaS) (telles que par exemple, AWS*, GCP*, Openstack*, ...) soit en Conteneur en tant que Service (container) as a Service CaaS) (telles que par exemple, Kubernetes *), soit en Calcul Haute Performance HPC (telles que par exemple, Slurm*, PBS*).

L'invention concerne également l'utilisation du système (S) selon l'une des particularités décrites ci-dessus, avec ses modèles entrainés et ses datasets annotés, notamment pour le transfert d'apprentissage, pour l'allocation adéquate des ressources et pour l'exécution d'un ou plusieurs jobs tels que décrits.

L'invention concerne également l'utilisation du Système mettant en œuvre une suite d'outils, modulaires et clairement structurés (SOACAIA) avec ses modèles entrainés et ses datasets annotés, selon l'une des particularités décrites ci-dessus, comme étant un lieu de ressources pour les utilisateurs. Ledit lieu de ressources définissant les différentes zones de sauvegarde et de stockage (par exemple des modèles, des frameworks, des données, etc.) à disposition et facilitant la coopération entre différents utilisateurs accélère la productivité et l'efficacité de chacun desdits utilisateurs. Ceci permet aux utilisateurs de bénéficier d'un gain de temps conséquent et de se consacrer entièrement à leur tâche principale.

[Fig. 1] représente schématiquement l'architecture des modules et en combinaison avec [Fig. 2] un exemple d'utilisation du système par un data scientist. Dans cet exemple l'utilisateur accède à son espace privé sécurisé en échangeant par l'intermédiaire de l'interface (14, [Fig.2]) de Studio, ses informations d'accréditation, puis sélectionne au moins un modèle (21), au moins un framework (25), au moins un dataset (24) et éventuellement un modèle entraîné (23). Via l'IHM (13, [Fig 1]), l'utilisateur soumet une tâche d'entrainement du modèle sélectionné (21 ou 23) avec un framework et le dataset choisis sur une infrastructure configurée via l'orchestrateur, le modèle entrainé résultant peut être stocké dans la forge (23, [Fig.1]) et/puis déployé en production dans une application IA (3, [Fig.2]).

Le déploiement du modèle sur un serveur ou une machine est effectué par l'orchestrateur (3, [Fig. 1]) qui gère également l'entrainement. Dans une dernière étape la sauvegarde du modèle entraîné est effectuée dans Forge (2) et vient enrichir le catalogue de modèles entraînés (23).

Des datasets annotées et à disposition sont une ressource importante et précieuse pour valider et entrainer les modèles.

Selon une variante, FastMLE peut être utilisé pour créer et enrichir le catalogue avec des modèles pré-entrainés et des datasets annotées associés dans différents domaines. Par exemple dans les domaines de la cyber sécurité, où la détection en amont de toutes les phases qui précèdent une attaque ciblée est un problème crucial. La disponibilité, les quantités importantes de données (Big data) permettent aujourd'hui d'envisager une approche préventive de la détection des attaques. L'utilisation de l'IA pour les Prescriptives SOC (centre opérationnel de sécurité prescriptifs) apporte des solutions. Avec une collecte et un traitement de données issues de différentes sources (externes et internes) on alimente une base (modèles pré-entrainés et datasets associés). Le Machine Learning et les procédés de visualisation de données permettent ensuite de réaliser de l'analyse comportementale et en déduire du prédictif dans les SOC.

Dans un autre exemple, le domaine du CDC qui est un centre de données intelligent et autonome capable de recevoir et analyser des données du réseau, des serveurs, des applications, des systèmes de refroidissement et de consommation d'énergie, l'utilisation du système (SOACAIA) permet la construction d'une application fournissant l'analyse en temps réel de tous les événements, fournissant des graphes d'interprétation avec des prédictions utilisant un indicateur de confiance concernant les possibles pannes et les éléments qui seront potentiellement impactés. Le système (SOACAIA) permet d'optimiser la disponibilité et la performance des applications et des infrastructures.

Dans encore un autre exemple, les domaines de la vision par ordinateur et vidéo surveillance le système (SOACAIA) à travers le composant Forge met à disposition les toutes dernières technologies d'analyse d'images et fournit une application de vidéo intelligence capable d'extraire des caractéristiques des visages, véhicules, sacs et autres objets et fournit de puissants services de reconnaissance de visages, de suivi de mouvements de foules, de recherche de personnes à partir de caractéristiques données, de reconnaissance de plaques d'immatriculation entre autres.

On comprend de la présente demande que divers modes de réalisation prévoient et visent à protéger un système de supervision (gestion de moteurs d'apprentissage et de dataset) et d'orchestration (c'est-à-dire allocation de ressources optimisées) pour l'exécution de multiples entraînements en parallèle sur divers moteurs d'apprentissage (Machine Learning et/ou Deep Learning) avec divers jeux de données (dataset) afin d'entraîner plusieurs moteurs et accélérer l'obtention d'une sélection des moteurs les plus performants pour chaque type de jeux de données (potentiel surveillance des sélections obtenues afin d'améliorer la gestion des supervisions ultérieures).

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système utilisant une Suite d 'Outils, d'Aide à la Conception d'Application d'Intelligence Artificielle, (SOACAIA), modulaires et clairement structurés, exécutables sur des plates-formes informatiques ou des infrastructures hybrides pour parcourir développer, rendre disponible et gérer des applications d'IA (Intelligence Artificielle), ce jeu d'outils implémentant quatre fonctions :
Une fonction Studio permettant d'établir un espace partagé sécurisé et privé pour l'entreprise dans lequel l'équipe étendue des analystes commerciaux, des scientifiques de données, « data scientist » des architectes d'application et des gestionnaires IT (Technologie de l'information ou Information Technology en anglais) peuvent communiquer et travailler ensembles en collaboration ;
Une fonction Forge permettant d'industrialiser les instances d'IA et de rendre les modèles analytiques et leurs jeux de données associés disponibles par un catalogue aux équipes de développement sous réserve du respect des conditions de sécurité et de conformité de traitement ;
Une fonction Orchestrateur pour gérer la mise en œuvre totale des instances d'IA conçues par la fonction STUDIO et industrialisée par la fonction Forge et effectuer la gestion permanente sur une infrastructure hybride de nuage ;
Une fonction de moteur d'apprentissage machine rapide FMLE (Fast Machine Learning Engine ou FastML Engine, en anglais) qui est une boîte à outil d'apprentissage machine pour calculateurs hautes performances HPC et infrastructures hybrides facilitant l'utilisation des puissances de calcul et les possibilités des grappes(clusters) de calculateurs hautes performances en tant que support d'exécution des modèles d'entrainement d'apprentissage machine et spécialement des modèles d'entrainement d'apprentissage profond.

2. Fonction moteur d'apprentissage machine rapide (FastML Engine) comportant une interface qui a pour objectif, lors de son exécution sur une plateforme, de faciliter la phase de conception et de mise au point des modèles d'apprentissage machine (Machine Learning Models) lorsqu'un premier jet de ce modèle est réalisé et d'entrainer sur un ou plusieurs jeu(x) de données annotées (dataset) pour mettre au point le modèle, le module FastMLE permettant de gérer les fichiers datasets existants, annotés et prêts à l'emploi, en permettant la sélection d'un ou plusieurs des fichiers datasets par le« data scientist » et de les charger sur une infrastructure où doit s'exécuter l'entrainement de son modèle ou de les sauvegarder dans au moins une base de données exploitée par FastMLE.

3. Fonction moteur d'apprentissage machine rapide selon la revendication 2, **caractérisée en ce que** son interface permet à l'utilisateur De choisir dans un menu de créer au moins une « expérimentation » EX1, déclenchant un menu permettant d'associer le code d'un modèle M1, soit défini par l'utilisateur soit parmi les différents modèles Mi mémorisés par le service, à un script de lancement SLi et à un framework FML j de ML (comme par exemple Tensorflow, ...) et selon les choix créer une association (par exemple, EX1, M1, SLi, FMLj ou EX2, Mi, SLi2 FMJ3) dont chacune est mémorisée dans la base de métadonnées de FastMLE, chacune de ces informations générant la création d'un conteneur respectif (EX1, EX2) lorsque l'utilisateur lancera un entrainement; ou De choisir dans un autre menu de créer et de lancer un « entrainement » E1 à exécuter sur son modèle, en associant, une expérimentation EXk choisie parmi les expérimentations préalablement créées, du catalogue Forge, à un dataset DSm (préalablement chargé sur l'infrastructure via FastMLE), et en option à des hyper paramètres selon les choix de l'utilisateur, l'association EXk, DSm étant concrétisée dans un conteneur (container), l'information de l'association étant mémorisée dans les métadonnées de FastMLE.

4. Fonction moteur d'apprentissage machine rapide selon la revendication 2 ou 3, **caractérisé en ce qu'**un conteneur est exécuté sur un cluster de haute performance ayant des ressources CPU, RAM, GPUs telles que choisies par le data scientist dans l'utilisation de FastMLE.

5. Fonction moteur d'apprentissage machine rapide selon une des revendications 2 à 4, **caractérisé en ce qu'**une autre interface de FastMLE permet à l'utilisateur de superviser son entrainement, suivre son évolution (initialisation, en cours, terminé...) et surveiller ou monitorer l'entrainement.

6. Fonction moteur d'apprentissage machine rapide selon une des revendications 2 à 5, **caractérisé en ce que** le moteur FMLE nécessite Un planificateur (scheduler) qui gère toutes les ressources sur le groupe de machines pour permettre d'allouer des ressources à une ou plusieurs tâches (jobs) ;
Un système de gestion de conteneur (container) utilisé pour supporter les expérimentations d'apprentissage machine et ainsi sécuriser leur exécution afin qu'ils ne soient accessibles que par l'utilisateur ou groupe ou entreprise ; Un dépôt pour sauvegarder les images de conteneur (container) des environnements (frameworks) d'apprentissage profond qui sont utilisés pour lancer les expérimentations EX ; Un système de fichiers distribués de type NFS pour partager les fichiers des datasets entre les expériences d'apprentissage machine.

7. Système selon la revendication 1 associé à la fonction moteur d'apprentissage machine rapide selon une des revendications 2 à 6, **caractérisée en ce qu'**en utilisant les fonctionnalités de l'orchestrateur Yorc, la fonction va permettre de générer au moins une tâche (« job » en anglais) HPC pour permettre l'exécution de chaque entrainement de chaque modèle.

8. Système selon la revendication 1 ou associé à la fonction moteur d'apprentissage machine rapide selon une des revendications 2 à 6 utilisant une suite (SOACAIA) d'outils modulaires et clairement structurés, exécutables sur des plates-formes informatiques pour implémenter quatre fonctions STUDIO, FORGE, ORCHESTRATEUR, FastMLE, **caractérisé en ce que** les applications d'IA sont rendues indépendantes des infrastructures de support par l'orchestration de la fonction ORCHESTRATEUR basée sur TOSCA permettant de construire des applications nativement transportables à travers les infrastructures.

9. Système selon la revendication 1 ou associé à la fonction moteur d'apprentissage machine rapide selon une des revendications 2 à 6 utilisant une suite (SOACAIA) d'outils modulaires et clairement structurés, exécutables sur des plates-formes informatiques pour implémenter quatre fonctions, **caractérisé en ce que** la fonction STUDIO comprend un libre-service de développement d'applications cognitives comprenant un service de gestion de catalogue et des applications et une interface utilisateur d'apprentissage en profondeur.

10. Système selon la revendication 1 ou associé à la fonction moteur d'apprentissage machine rapide selon une des revendications 2 à 9 utilisant une suite (SOACAIA) d'outils, modulaires et clairement structurés, exécutables sur des plates-formes informatiques pour implémenter quatre fonctions, **caractérisé en ce que** la fonction STUDIO fournit deux fonctions Une première, de portail donnant accès au catalogue de composants, permettant l'assemblage de composants en applications, (au standard TOSCA) et de gérer leur déploiement sur des infrastructures variées ; Une seconde, d'IHM, et d'interface d'utilisateur du moteur (engine) FastMLE fournissant une interface graphique donnant accès aux fonctions de développement de modèles ML/DL du moteur FastMLE.

11. Système selon la revendication 1 ou associé à la fonction moteur d'apprentissage machine rapide selon une des revendications 2 à 10 utilisant une suite (SOACAIA) d'outils, modulaires et clairement structurés, exécutables sur des plates-formes informatiques pour implémenter quatre fonctions **caractérisé en ce que** le portail de la fonction STUDIO offre une boîte à outil (basée sur le standard TOSCA) pour la gestion, la conception, l'exécution et la génération d'applications et de données de test et comporte Deux interfaces graphiques, l'une permettant à l'utilisateur de définir chaque application au standard TOSCA à partir des composants du catalogue qui sont réunis par une action glisser-déposer et pour leur identification, l'utilisateur leur associe, par cette interface, des valeurs et des actions définissant leur cycle de vie ; et l'autre pour la mise au point du(des) modèles ML/DL, Un menu gestion qui permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en associant l'infrastructure sur laquelle l'application sera exécutée par une action glisser-déposer dans un ou plusieurs objets « compute » définissant le choix du type de calculateur.

12. Système selon la revendication 1 ou associé à la fonction moteur d'apprentissage machine rapide selon une des revendications 2 à 11 utilisant une suite (SOACAIA) d'outils, modulaires et clairement structurés, exécutables sur des plates-formes informatiques pour implémenter quatre fonctions, **caractérisé en ce que** la fonction Forge comprend des modèles pré-entrainés mémorisés dans le système et accessibles à l'utilisateur par une interface de sélection, pour permettre l'apprentissage de transfert, des cas d'usage pour le développement rapide de bout en bout, des composants technologiques ainsi que pour instaurer les environnements spécifiques des utilisateurs et les cas d'usages.

13. Système selon la revendication 1 ou associé à la fonction moteur d'apprentissage machine rapide selon une des revendications 2 à 12 utilisant une suite (SOACAIA) d'outils, modulaires et clairement structurés, exécutables sur des plates-formes informatiques pour implémenter quatre fonctions, **caractérisé en ce que** la fonction Forge comprend un module de programme qui exécuté sur un serveur permet de créer un espace de travail privé commun à une entreprise ou un groupe d'utilisateurs accrédités pour stocker, partager, retrouver et mettre à jour de façon sécurisée (par exemple après authentification des utilisateurs et vérification des droits d'accès (credentials)), des plans de composants, des environnements d'apprentissages profonds (Deep Learning Frameworks), des jeux de données et des modèles entrainés et constituant un entrepôt pour les composants analytiques, les modèles et les jeux de données.

14. Système selon la revendication 1 ou associé à la fonction moteur d'apprentissage machine rapide selon une des revendications 2 à 13 utilisant une suite (SOACAIA) d'outils, modulaires et clairement structurés, exécutables sur des plates-formes informatiques pour implémenter quatre fonctions, **caractérisé en ce que** la fonction Forge comprend un module de programme et une interface homme machine IHM permettant de gérer un catalogue de datasets, ainsi qu'un catalogue de modèles et un catalogue des environnements de développement de modèles cadres (frameworks, Fmks, en anglais) disponibles pour le service, apportant ainsi une facilité supplémentaire au Data Scientist.

15. Système selon la revendication 1 ou associé à la fonction moteur d'apprentissage machine rapide selon une des revendications 2 à 14 utilisant une suite (SOACAIA) d'outils, modulaires et clairement structurés, exécutables sur des plates-formes informatiques pour implémenter quatre fonctions, **caractérisé en ce que** la fonction Forge propose un catalogue donnant accès à au moins un type de composants parmi les composants suivants De type apprentissage machine (Machine Learning, ML, en anglais), comme les cadres ML (par exemple le flux tensoriel, Tensorflow* en anglais), mais aussi les modèles et les jeux de donnés (datasets en anglais) ; De type analyse de données (Big Data Analytics en anglais) (par exemple la suite Elastic*, les distribution Hadoop*...) pour les jeux de données (datasets) ,
Des outils de développement (27) (type Jupyter*, R*, Python* ..) De type outils d'analyse de données (26) ; De type outils statistiques (28).

16. Système selon la revendication 1 ou associé à la fonction moteur d'apprentissage machine rapide selon une des revendications 2 à 15 utilisant une suite (SOACAIA) d'outils, modulaires et clairement structurés, exécutables sur des plates-formes informatiques pour implémenter quatre fonctions, **caractérisé en ce que** la fonction Forge est un catalogue donnant accès aussi à des plans (dits blueprints en anglais) schémas directeur d'application (templates).

17. Système selon la revendication 1 ou associé à la fonction moteur d'apprentissage machine rapide selon une des revendications 2 à 16 utilisant une suite (SOACAIA) d'outils, modulaires et clairement structurés, exécutables sur des plates-formes informatiques pour implémenter quatre fonctions, **caractérisé en ce que** le principe de fonctionnement de la fonction orchestrateur réalisée par un module de programme Yorc recevant une application TOSCA* est d'allouer les ressources physiques correspondant au composant « Compute » qui en fonction des configurations peut être une machine virtuelle, ou un nœud physique, puis d'installer sur cette ressource les logiciels spécifiés dans l'application TOSCA pour ce composant « Compute », et de déployer des conteneurs « Docker » contenant les programmes d'entrainement des modèles et d'y associer les fichiers de datasets montés via les volumes spécifiés dans (DockerVolume) pour ce composant « Compute».

18. Système selon la revendication 1 ou associé à la fonction moteur d'apprentissage machine rapide selon une des revendications 2 à 17 utilisant une suite (SOACAIA) d'outils, modulaires et clairement structurés, exécutables sur des plates-formes informatiques pour implémenter quatre fonctions **caractérisé en ce que** le déploiement d'une telle application (au standard TOSCA) par l'orchestrateur Yorc, s'effectue en utilisant le plugin Slurm de l'orchestrateur qui va déclencher la planification d'une tâche slurm (scheduling d'un job slurm) sur une grappe (cluster) de calculateur haute performance (HPC).

19. Système selon la revendication 1 ou associé à la fonction moteur d'apprentissage machine rapide selon une des revendications 2 à 18 utilisant une suite (SOACAIA) d'outils, modulaires et clairement structurés, exécutables sur des plates-formes informatiques pour implémenter quatre fonctions **caractérisé en ce que** l'orchestrateur Yorc surveille pour chaque utilisateur les ressources disponibles de chaque super calculateur ou de chaque nuage et , lorsque les ressources requises seront disponibles, un nœud de supercalculateur ou d'un nuage sera alloué (correspondant au Compute TOSCA), le conteneur (Dockercontainer) sera installé sur un ou plusieurs nœuds de ce supercalculateur et les volumes correspondant aux données en entrée et sortie (DockerVolume) seront montés, puis l'exécution du conteneur effectuée.

20. Système selon la revendication 1 ou associé à la fonction moteur d'apprentissage machine rapide selon une des revendications 2 à 18 utilisant une suite (SOACAIA) d'outils, modulaires et clairement structurés, exécutables sur des plates-formes informatiques pour implémenter quatre fonctions **caractérisé en ce que** la fonction Orchestrateur (orchestrator) propose à l'utilisateur des connecteurs pour gérer les applications sur différentes infrastructures soit en Infrastructure en tant que Service (Infrastructure as a Service IaaS) (telles que par exemple, AWS*, GCP*, Openstack*,...) soit en Conteneur en tant que Service (Container as a Service CaaS) (telles que par exemple, Kubernetes *), soit en Calcul Haute Performance HPC (telles que par exemple, Slurm*, PBS*).

21. Système selon la revendication 1 ou associé à la fonction moteur d'apprentissage machine rapide selon une des revendications 2 à 18 utilisant une suite (SOACAIA) d'outils, modulaires et clairement structurés, exécutables sur des plates-formes informatiques pour implémenter quatre fonctions, **caractérisé en ce que** la fonction FastMLE (4) exploite et sauvegarde des données dans une base de données enrichie (24') mémorisant également les métadonnées.

22. Utilisation du Système selon une des revendications 7 à 21 pour la constitution de cas d'usage, qui permettront notamment d'enrichir la collection de plans « blueprints » et de composants de Forge (catalogue) : Les premiers cas d'usage identifiés étant
La cyber sécurité, avec l'utilisation de l'IA pour les Prescriptive SOC ; Le Centre de Données Cognitives (Cognitive Data Center (CDC) en anglais) avec utilisation de l'IA pour de la maintenance prédictive La vision par ordinateur, avec des applications IA de vidéo surveillance.

23. Procédé de développement, d'enregistrement, de traitement, d'analyse de modèles et de données utilisant le Système selon la revendication 1, comprenant au moins l'une des étapes suivantes Création d'un nouveau du modèle développé [I] Sauvegarde du nouveau modèle développé [II] dans la base (21) des nouveaux modèles sauvegardés Chargement du /des jeux de données pour le ou les entrainements [III] Chargement du nouveau modèle pour le ou les entrainements [IV] Chargement de l'environnement d'apprentissage (ML/DL) [V] Lancement d'un ou plusieurs entrainements, avec déploiement et gestion automatique de l'exécution par l'orchestrateur [VI] Réglage du nouveau modèle [VII] Sauvegarde du modèle entrainé [VIII] Déploiement sur un serveur du site d'exploitation du modèle entrainé pour inférence [IX] Acquisition par le système dans sa base de données opérationnelle des données opérationnelles enrichissant les jeux de données [X] nécessaires à l'amélioration de la qualité des modèles issus de l'entrainement.
